# EUROPEAN PATENT APPLICATION

(11) **EP 4 467 806 A1**
(43) Date of publication of application: **27.11.2024**
(21) Application number: 23175654.5
(22) Date of filing: 26.05.2023
(51) Int. Cl.: F03D 13/10, F03D 80/50, H02K 7/106, H02K 7/18, H02K 26/00

(54) **POWER TRAIN PORTION OF A WIND TURBINE**

(71) Applicant: Siemens Gamesa Renewable Energy A/S, 7330 Brande (DK)
(72) Inventor: Freire, Nuno Miguel Amaral, 3150-109 Condeixa (PT); Godridge, Paul, Cheadle, SK8 7HX (GB); Radhakrishna Pillai, Rahul, 8210 Aarhus (DK); Wu, Zhan-Yuan, Sheffield, S10 4BB (GB)
(74) Representative: SGRE-Association

(57) **Abstract**

It is described a power train portion (1) of a wind turbine (26), comprising: an electrical generator (5) including: a stator (6) having plural teeth (7) with slots (8) in between and having at least one multiphase stator winding set at least partly arranged in the slots (8) forming plural coils (10a,10b,10c); a rotor (11) having plural permanent magnets (12a, 12b, 12c) mounted and being rotatably supported relative to the stator (6); a hub (28) with plural mounting sites (32) for plural rotor blades (29), the hub (28) being coupled to the rotor (11), wherein when the hub (28) is rotated to at least one predetermined azimuthal position, one (10a) of the coils (10a,b,c) and one (12a) of the magnets (12a,b,c) have a predetermined circumferential relative position (23a,23b,23c,...).

## Description

### Field of invention

The present invention relates to a power train portion of a wind turbine including a stator and a rotor. The present invention further relates to a wind turbine and still further relates to a method of handling a power train portion of a wind turbine, in particular during assembly and/or maintenance.

### Art Background

For mounting, assembling and/or maintenance of one or more rotor blades connected or to be connected to a rotor of a wind turbine, the rotor needs to be positioned in a particular azimuthal orientation in order to allow assembly/maintenance/replacement of the rotor blade. Thereby, the generator of the wind turbine may be employed in a motor mode, in order to rotate the rotor to a particular azimuthal position.

It has been observed, that during such operation, substantial load acts on the electrical and/or mechanical components, thereby in particular producing stress in a converter or inverter coupled to the generator.

Conventionally, the inverter or converter has been designed to be rated for the highest current expected to occur during all kinds of operational conditions. Thereby, relatively expensive, heavy and costly power electronics has been utilized. Thus, disadvantages regarding weight, costs and complexity of the system are observed.

Thus, there may be a need for a power train portion of a wind turbine, for a wind turbine and for a corresponding method of handling a power train portion of a wind turbine, wherein load and/or stress to one or more components of the wind turbine, in particular power electronics and the generator, are reduced, while an accurate and reliable operation is enabled.

### Summary of the Invention

This need may be met by the subject matter according to the independent claims. Advantageous embodiments of the present invention are described by the dependent claims.

According to an embodiment of the present invention it is provided a power train portion of a wind turbine, comprising: an electrical generator including: a stator having plural teeth with slots in between and having at least one multi-phase stator winding set at least partly arranged in the slots forming plural coils; a rotor having plural permanent magnets mounted and being rotatably supported relative to the stator; a hub with plural mounting sites for plural rotor blades, the hub being coupled to the rotor, wherein when the hub is rotated to at least one predetermined azimuthal position, one of the coils and one of the magnets have a predetermined circumferential relative position.

The electrical generator may be configured as a synchronous electrical machine, in particular permanent magnet synchronous machine. The electrical generator may be operated in a motor mode in order to generate a mechanical torque which acts on the rotor in order to rotate the rotor (and the hub) to the predetermined azimuthal position. The stator may be a whole circumference stator or a stator comprising two or more stator segments each spanning a portion of a whole circumference, such as 180°, 120°, 90° or other values. In case of a segmented stator, each stator segment may for example comprise its associated winding set or even plural winding sets each winding set providing multiple phases, in particular three phases.

Along the circumferential direction (the rotor having a rotor axis extending along an axial direction which is perpendicular to the circumferential direction and a radial direction), coils associated with different phases of the multiple phases may be arranged adjacent to each other. Thereby, the coils may for example partly overlap or may not overlap in the circumferential direction. For example, for a distributed winding topology of the winding set(s), the coils associated with different phases being adjacent to each may in fact overlap. For a concentrated winding topology, the coils associated with different phases may for example not overlap in the circumferential direction.

The rotor may be an outer rotor or an inner rotor.

The teeth and also the slots of the stator may extend in the axial direction. The plural permanent magnets may be formed by plural rows of magnets extending in the axial direction or a direction inclined with respect to the axial direction, wherein the magnet rows are arranged adjacent to each other in the circumferential direction. The permanent magnets may for example be mounted at a rotor house using rotor slots or tracks having for example a retention structure substantially having a T-shape.

Between an external surface of the permanent magnets (for example a radially inner surface of the magnets for an outer rotor) and the radially outer surface (for an inner stator) of the stator (including the teeth and/or the winding sets), a gap may be formed, allowing the rotor to be rotated relatively to the stator about the rotor axis extending in the axial direction.

The hub may be a portion of the rotor or may be a structural element separate or not integrally formed with the rotor but which may be mechanically coupled and fixed with the rotor. The hub may have the function to provide mounting sites for plural rotor blades.

Embodiments of the present invention may exploit the possibility to define the azimuthal positions of the plural mounting sites relative to the circumferential positions of the plural permanent magnets. In other words, the embodiments of the present invention may exploit the possibility to define the predetermined azimuthal position of the hub (or the rotor) relative to the circumferential positions of the coils in the stator formed by the winding set(s) of the stator. The design of those relative positions may be such that less stress or load is imposed on the power electronics when a torque is required to be generated in a situation, when the hub is in one or more predetermined circumferential or azimuthal positions. When the hub is rotated to the at least one predetermined azimuthal position, for example one of plural potentially connectable or connected rotor blades may be maintained, assembled or replaced.

The at least one predetermined azimuthal position may for example correspond to a position where a considered rotor blade may be mounted or unmounted, wherein in this situation, the considered rotor blade may for example substantially be in a horizontal orientation, meaning that a longitudinal axis of the rotor blade may be substantially oriented to extend in the horizontal direction. In this mounting or assembly situation, the generator may be required to be operated in a motor mode in order to generate a mechanical torque to balance or at least help to balance a torque generated by the gravitational weight and aero dynamic torque of the one or more wind turbine blades.

Additionally or alternatively to the torque generated by the generator, a locking system may be utilized in order to lock the rotor (including the hub) to a stationary part of the wind turbine, in particular the stator, for example using one or more, in particular at least three, locking pins, as will be detailed below.

When one of the coils and one of the magnets have a predetermined circumferential relative position, a potentially required mechanical torque to be generated by the generator may be created while the load on the power electronics or the winding set is reduced compared to conventional systems and methods.

The inventors observed that when doing torque control of an electrical machine at very low speeds, the frequency of phase currents passing through the power electronics can be close to DC (DC at standstill). Current would become purely DC when the rotor electrical angle does not move. For given electrical positions, the distribution of current (or load) between the three phases could be such that a single phase is much more loaded than the other two or more phases. Embodiments of the present invention may relate to structural design of the electrical generator and/or the hub which may help to fix an optimal electrical position at which torque needs to be maintained, to reduce the stress on a converter or in general power electronics provided to be connected to the electrical generator for controlling the electrical generator.

The electrical generator may further comprise a converter, in particular AC/DC-DC/AC converter which may comprise plural power electronic switches such as power transistors, in order to convert a fixed frequency power stream received from the grid to a substantially DC power stream and to convert the DC power stream to a variable frequency power stream, having for example a frequency of 50 Hz or 60 Hz, which is supplied to the generator, in order to operate the generator in a motor mode. The converter or plural converters potentially connected to plural winding sets of the generator may be controlled according to vector control for example. For control of the converter, a converter control portion may be provided which may also be configured to operate the generator in a motor mode, in order to generate or produce a torque as required for example a maintenance or assembly process.

Embodiments of the present invention may be applied in an electrical horizontal blade mounting procedure in which a rotor blade is mounted to the hub or in general to the rotor when in a substantially horizontal orientation. Embodiments of the present invention may exploit the freedom to choose the rotor electric position which will correspond to the horizontal position of the rotor blade.

According to an embodiment of the present invention, the predetermined circumferential relative position is in particular characterized by a predetermined relative azimuthal angle difference between the one coil and the one magnet.

The relative azimuthal angle difference may be given or defined as mechanical relative azimuthal angle difference or as electrical relative angle difference.

For example, the predetermined azimuthal position of the hub may be defined as a particular rotation angle relative to a reference rotation angle.

For this predetermined azimuthal position of the hub the one magnet has a particular circumferential (or azimuthal) angle position. The predetermined relative azimuthal angle difference may then be calculated as the difference between the respective azimuthal angle of the position of the magnet and that of the one coil. The predetermined relative azimuthal angle difference may take one or more values including for example the value zero. The relative azimuthal angle difference may be characterized to be equal to a multiple of a particular angle difference. When there are more than one possibility for the predetermined relative azimuthal angle difference, implementation or construction of the power train portion may be simplified.

One possibility to manufacture such a power train portion may for example be to first assemble the stator and the rotor and then circumferentially adjust the hub such that the criterion is fulfilled that one of the coils and one of the magnets have a predetermined circumferential relative position, if or when the hub is in the predetermined azimuthal position. For example, the rotor may first be rotated relative to the stator such that the one coil and the one magnet have the predetermined circumferential relative position. Then the hub may be adjusted relative to the rotor such that for example one of the plural mounting sites points or is in the predetermined azimuthal position.

The hub may for example be oriented or rotated to the at least one predetermined azimuthal position when one of the plural mounting sites (for rotor blade) is at a predetermined azimuthal mounting site position, which may for example be a horizontal position or a vertical position or a position between a horizontal and a vertical position.

Thereby, a mounting/maintenance/assembly process of rotor blades may be simplified without leading to excessive stress to power electronics or other components of the wind turbine.

According to an embodiment of the present invention, the at least one winding set is configured to provide three electrical phases, wherein the predetermined relative azimuthal angle difference is substantially 60°*k/p, wherein p is the number of pole pairs of the magnets of the rotor and k is an integer.

The predetermined relative electrical angle difference may be substantially 60°*k.

p may be the number of pole pairs meaning the number of pairs including a south pole and north pole of the magnets arranged circumferentially adjacent to each other at the rotor. The integer k may be 0, 1, 2 or any natural integer. When the above defined criterion is met, while delivering the required torque, load, in particular current load for the different phases, may be avoided to reach a potentially maximum value, but may be substantially evenly distributed between two phases, thereby reducing stress to a converter on general power electronics.

According to an embodiment of the present invention, the predetermined relative azimuthal angle difference is set between a circumferential center axis of the coil and a circumferential center of the one of the magnets, wherein in particular the one coil and the one magnet are or are not axially aligned.

The coil may be formed by plural turns of wire portions around a central coil axis in order to form substantially a coil having cylindrical or spiral shape. The coil axis may have a particular circumferential position which can be considered as the circumferential position of the circumferential center axis of the coil. The circumferential center of the one of the magnets may be the center of the magnet in the circumferential direction. Also the coil and the magnet may be axially offset, for example in the situation, where a skewed magnet row design is employed as explained below.

According to an embodiment of the present invention, the predetermined azimuthal position of the hub is a locking position of the rotor or the hub at which the hub and/or the rotor can be locked to the stator, in particular employing a locking system.

When the hub is in the predetermined azimuthal position, a locking system may be employed in order to lock the rotor or the hub to a stationary part, in particular the stator. Assembly/maintenance or replacement of a rotor blade may for example be performed after the rotor has been locked to the stator. In order to reach the locking position, the rotor may be slightly rotated using a mechanical torque generated by the generator. When coming closer to the locking position, the rotational speed of the rotor may be decreased in order to slowly reach the exact locking position. In particular during this very low speed rotation of the rotor, embodiments of the present invention may provide advantages, since when the rotor is close to the locking position, the electrical load may be advantageously distributed across several phases and avoiding maximum current in potentially only one phase.

According to an embodiment of the present invention, the rotor, in particular a brake disk coupled to or included in the rotor, comprises at least one locking hole used for locking the rotor to the stator; and/or the power train further comprising: at least one locking pin, in particular guided in a hole of the stator, insertable into the locking hole of rotor.

The locking pin may for example have a substantially cylindrical shape and the locking hole may have an in particular circular cross-section. The locking pin may for example be guided in a substantially circular-shaped hole of the stator. The locking hole in the rotor (or brake disk) may be a through-hole. Also the hole in the stator may be a through-hole. The locking pin may be operated for example by a hydraulic system which is capable to press onto the locking pin for insertion or to draw at the locking pin for releasing from the locking hole. Other locking systems may be provided or applicable.

According to an embodiment of the present invention, the magnets are mounted in magnet rows substantially along the axial direction, wherein the one magnet is a first magnet of the magnet row; or wherein the magnets are mounted in magnet rows in a skewed manner, the magnet rows including a skewing angle relative to the axial direction and the one magnet is a magnet substantially at an axial center of the magnet row.

The magnet row may extend to a particular magnet row length in the axial direction. The one magnet may for example be a magnet which is in the center of the magnet row corresponding to a position at the half of the magnet row length. The magnets spaced apart from the axial center of the magnet row may not exactly fulfil the criterion that they have a predetermined relative azimuthal angle difference to the one coil. The deviation may be relatively small and some of the magnets may have a positive deviation and some may have a negative deviation which overall substantially cancel.

According to an embodiment of the present invention, when the hub is rotated to the predetermined position, a torque can be generated by the generator by allowing, in the winding set, current flow of two phases having substantially same magnitude, while a current flow of the remaining phase is substantially zero, wherein the magnitude is less than a maximum magnitude when the rotor would be rotated 360° of an electrical angle.

Thereby, load acting on power electronics may be reduced. This may in particular be advantageous, since during or for positioning the hub at the predetermined azimuthal position, a relatively long time period may be required in order to appropriately perform finetuning of slight rotational movements/positioning.

According to an embodiment of the present invention, the winding set exhibits concentrated winding topology; or the winding set exhibits distributed winding topology, wherein the one coil is formed by a wire portion of the winding set wound around teeth that are not immediately circumferentially adjacent to each other and/or having one or more other teeth in between.

For the distributed winding, the coils providing the plural phases may partly overlap the circumferential direction. Nevertheless, for each coil, a corresponding coil axis may be defined relative to which the azimuthal position or circumferential position of the coil can be determined or defined.

According to an embodiment of the present invention, the power train portion further comprises at least one converter electrically connected to the multiphase winding set.

The converter may provide for each phase an input/output terminal. The multi-phase winding set, when for example three phases are provided, may for example be connected in a star configuration or a delta configuration. Between an AC/DC portion and a DC/AC portion, the converter may comprise a DC link comprising one or more capacitors.

According to an embodiment of the present invention, the one coil is a phase A coil which in particular has a 90° bent at an axial end of the stator.

In other embodiments, the one coil may be a phase B coil or a phase C coil and/or the coil may not be bent at 90° but may be bent to a lesser extent, for example by 0° or 45° for example.

According to an embodiment of the present invention, the power train portion further comprises plural rotor blades, wherein zero or more are mounted at the hub or in general at the rotor. Thereby, the power train may be utilized before, during or after assembly or disassembly of one or more rotor blades.

According to an embodiment of the present invention it is provided a wind turbine comprising a nacelle partly housing a power train according to one of the precedingly described embodiments.

The nacelle may in particular harbour at least the generator and potentially a converter. The hub (or a portion of the rotor including mounting sites for rotor blades) may be exposed to an environment.

It should be understood, that features, individually or in any combination, disclosed, explained, applied or employed for a power train portion of a wind turbine, can also, individually or in any combination, provided or employed or applied to a method of handling a power train portion of a wind turbine according to embodiments of the present invention and vice versa.

According to an embodiment of the present invention it is provided a method of handling a power train portion of a wind turbine, in particular during assembly and/or maintenance, the power train portion comprising: an electrical generator including: a stator having plural teeth with slots in between and having at least one multiphase stator winding set at least partly arranged in the slots forming plural coils; a rotor having plural permanent magnets mounted and being rotatably supported relative to the stator; a hub with plural mounting sites for plural rotor blades, the hub being coupled to the rotor, the method comprising: rotating the hub to a predetermined azimuthal position, one of the coils and one of the magnets thereby having a predetermined circumferential relative position.

The method may for example be carried out by a control portion, in particular a control portion of a controller of the wind turbine. The method may thereby be implemented in software and/or hardware. Human maintenance personnel may for example define and supply control commands to a wind turbine controller (for starting or triggering the method e.g.) using for example an input and output system for providing user input to the system.

According to an embodiment of the present invention, the method further comprises locking the rotor to the stator, while the hub is in the predetermined azimuthal position; and/or performing maintenance and/or assembly work; and/or unlocking the rotor from the stator, while the hub is in the predetermined azimuthal position; and/or rotating the rotor or the hub such that the hub is in another azimuthal position different from the predetermined azimuthal position.

For example, one or more rotor blades may be mounted or demounted from the hub or in general the rotor during performing the maintenance and/or assembly work. For example, plural rotor blades, such as three rotor blades, may be assembled to the hub subsequently thereby repeatedly performing a method to handle the power train portion.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 illustrates a portion of a power train portion of a wind turbine according to an embodiment of the present invention in a view along an axial direction;
Figs. 2 and 3 illustrate phase currents as considered in embodiments according to the embodiments of the present invention;
Figs. 4 and 5 illustrate as electrical phase diagrams relative positioning of a coil and a magnet as adopted according to embodiments of the present invention; and
Fig. 6 schematically illustrates a wind turbine according to an embodiment of the present invention.

### Detailed Description

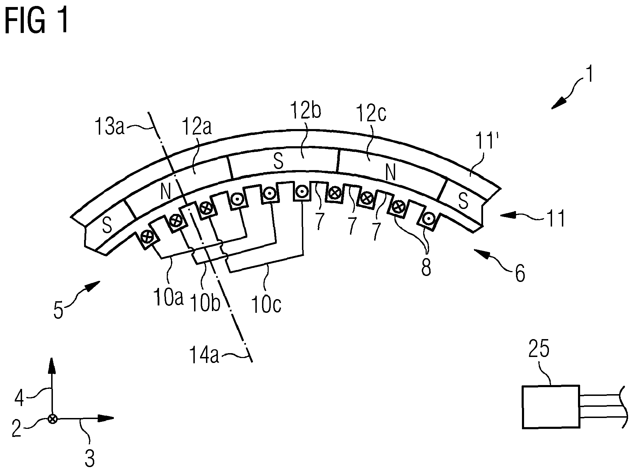

The power train portion 1 illustrated in **Fig. 1** along an axial direction 2 (being perpendicular to a circumferential direction 3 and also perpendicular to a radial direction 4) comprises an electrical generator 5 as well as a not in detail illustrated hub. The electrical generator 5 includes a stator 6 having plural teeth 7 with slots 8 in between and having at least one multi-phase stator winding set , wherein the multi-phase stator winding set is at least partly arranged in the slots 8 forming plural coils 10a, 10b, 10c.

Crosses in circle of coils side indicate current flowing into the drawing plane, points in circle of coils side indicate current flowing out of the drawing plane.

The electrical generator 5 further comprises a rotor 11 having plural magnets 12a, 12b, 12c, ... mounted at rotor house 11' being rotatably supported relative to the stator 6. A not in detail illustrated hub has plural mounting sites for plural rotor blades, wherein the hub is coupled to the rotor 11. When the hub and thereby also the rotor 11 is rotated to at least one predetermined azimuthal position, one (10a) of the coils 10a, 10b, 10c and one (12a) of the magnets 12a, 12b, 12c, ... have a predetermined circumferential axial position.

In the embodiment illustrated in Fig. 1, the circumferential position of the magnet 12a is defined as a circumferential center 13a of the magnet 12a. Further, the circumferential position of the coil 10a is defined by circumferential center axis 14a of the coil 10a. In the embodiment illustrated in Fig. 1, the predetermined circumferential relative position is characterized by a predetermined relative azimuthal angle difference between the azimuthal positions of the one coil 10a and the one magnet 12a. The predetermined relative azimuthal angle difference is in the illustrated embodiment 0°. In other embodiments, the predetermined relative azimuthal angle difference may be 60° * k/p wherein p is the number of pole pairs of the magnets 12a, 12b, 12c ... and k is an integer taking values 0, 1, 2 or any other natural number.

It should be understood that the magnets 12a, 12b, 12c, ... are arranged side by side along the circumferential direction 3 having alternating magnetic field orientation, such that they provide alternatively north pole (N), south pole (S).

When in the relative circumferential position as illustrated in Fig. 1, the hub is e.g. in a locking position for locking the rotor or the hub at the stationary part or in particular the stator 6. A not illustrated brake disk coupled to the rotor comprises at least one locking hole used for locking the rotor to the stator. A locking pin may be inserted through the locking hole of the rotor and also being guided in a hole of the stator in order to lock the rotor to the stator.

While Fig. 1 illustrates a distributed winding topology of the windings of the stator 6, the present invention may also be applied for a concentrated winding topology.

As can be appreciated from Fig. 1, the one coil 10a is formed by a wire portion of the winding set wound around teeth 7 that are not immediately circumferential adjacent to each other and/or having one or more other teeth in between. In particular, the coil 10a goes around three teeth.

The power train portion 1 may further comprise a converter 25 which is electrically connected to the multi-phase winding set and thus to the coils 10a, 10b, 10c.

The final winding set connected to the inverter may have multiple sets like 10a,10b,10c in series. But all of them may be looking similar and with the same spatial relationship to the nearest magnet centre 13a.

The power train portion may further comprise plural rotor blades (not illustrated in the figures), zero or more are mounted at the hub. The power train portion 1 may be housed in a nacelle of a wind turbine at least partially.

In other embodiments the magnets 12a, 12b, 12c are arranged or mounted at the rotor house 15 in rows extending either substantially along the axial direction 2 or being skewed or inclined with respect to the axial direction 2.

In one embodiment the magnet rows are extending with a skewing angle inclined to the axial direction 2 wherein the magnet rows are arranged spaced apart in the circumferential direction 3. When the magnet rows are skewed and inclined relative to the axial direction 2, the one magnet may be selected as the magnet substantially at an axial center of the magnet row. E.g. the magnet at an axial centre of the of magnet row and one of the coils have a predetermined circumferential axial position, e.g. relative circumferential angle of zero degree.

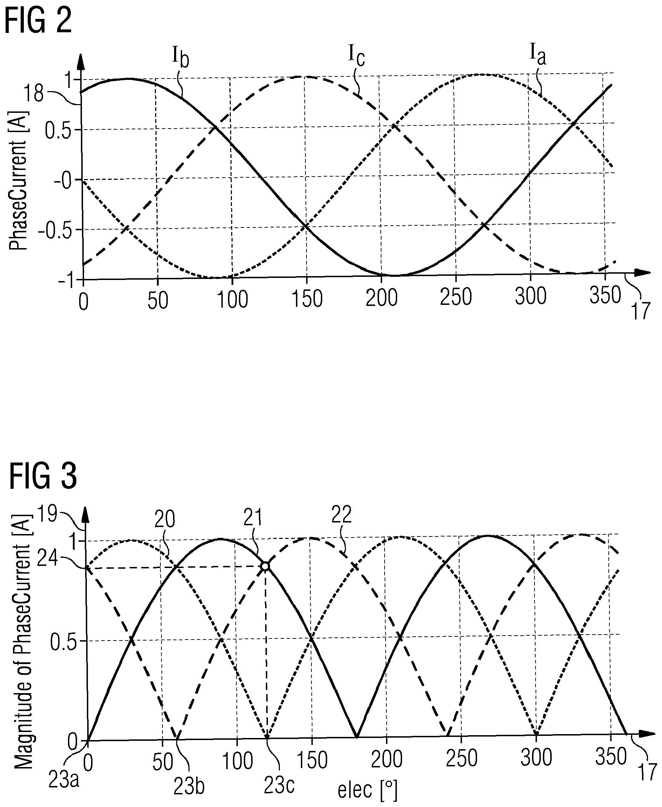

**Figs. 2 and 3** illustrate in coordinate systems having abscissas 17 indicating the electrical angle and having ordinates 18 indicating the phase current (pu, i.e. per unit) or the magnitude of the phase current (pu), respectively, the phase current Ia of the phase A, the phase current Ib of the phase B and the phase current Ic of the phase C for the situation that a current Iq of 1 pu (per unit) and Id of 0 Ampere is generated by the electrical generator 5 illustrated in Fig. 1.

As can be appreciated from Fig. 3 illustrating the magnitude 20, 21, 22 of the phase currents Ia, Ib, Ic in Fig. 2, respectively, the highest peak possible is the phase current of 1 pu (per unit). Fig. 3 thereby shows that the highest current in any phase would repeat every 60°, i.e. the phase A has the highest amplitude of the current at the electrical angle of 30°, while the phase current Ic has the highest amplitude at electrical angle of 90°.

If the design of the turbine is such that when the rotor is rotated to the blade mounting positions (there may be three specific positions of blade mounting which are 120° away from each), the rotor electrical angle coincides with the electrical angle equal to or close to a multiple of 30°, one of the phases will be heavily loaded. This is because, in order to lock the rotor in place in these defined positions, fine control of torque may be required at or around these electrical positions (only ± 10° from the aligned position of lock-pin and lock-hole).

The fig. 3 also shows that if the electrical angle at which the rotor needs to be locked is 0° or a multiple of 60°, the highest current experience by any phase is only 86.6% of the peak height. Thus, these positions are employed according to embodiments of the present invention resulting in a saving of 13.4% of current capacity on the devices, in particular the converter. This saving in current is realized slightly around the locking point. When the electrical position changes, the peak current loading would change as shown in the Figs. 2, 3 with it reaching a peak of 100% from 86.6% with a change in electrical degree of 30°. However, when the rotor is moved away from the positions of 60° or a multiple of 60°, the rotor speed is typically much higher than very close to the locking position. Thus, the load experienced from positions away from the multiples of 60° occur only during relatively short time intervals.

According to embodiments of the present invention, the positions 23a, 23b, 23c, ... represent relative azimuthal angle differences between the one coil 10a and the one magnet 12a (or 12a') when the hub is rotated to at least one predetermined azimuthal position (in particular locking position or mounting position for blades). At these relative azimuthal angle difference positions 23a, 23b, 23c, ..., two of the phase currents have a value 24 which corresponds to 0.866 pu, being 86.6% of the peak current.

At the azimuthal angle difference 23a for example, a constant torque may for example be provided by current flow of phase currents Ia and Ib having the magnitude of 0.86 of the peak value while the phase C phase current Ic is 0. The required magnitude of the current for the phase A and phase B currents is 0.86 times the maximum current.

According to an embodiment of the present invention, the locking position of the hub at the blade installation positions can be designed such that they happen at multiples of 60° with the help to realize this potential saving of phase currents. Thereby, by setting the circumferential angle between the center of the A phase coil (for example coil 10a illustrated in Fig. 1) in the stator winding to the nearest magnet slot to be a value of 0 or 60 * k/p (where k is an integer and p is the pole pairs in the machine).

For a machine with rotor magnet skew, circumferential angle difference may be calculated between the center of the phase A coil and the axial center of the nearest magnet slot, for example the magnet at the center of the magnet row.

The coil 10a may for example be a 90° coil having a 90° bent at an axial end of the stator. The coil 10a may for example be a phase A coil. According to embodiments of the present invention, the positions of the locks are chosen such that the center of the phase A coil coincides with the axial center of the first magnet slot, for example the magnet 12a illustrated in Fig. 1. The axial end magnet 12a may for example be utilized for defining the alignment, when the magnets are arranged in rows substantially or exactly being parallel to the axial direction 2.

Embodiments of the present invention may provide an optimized or at least improved operation of the generator during maintenance or assembly or replacement work which may include to rotate the rotor or the hub to a predetermined position then holding or fixing the rotor relative to a stationary portion, in particular the stator. Thereby, peak current may be reduced and losses at specific rotor positions at which the converter is expected to operate longer.

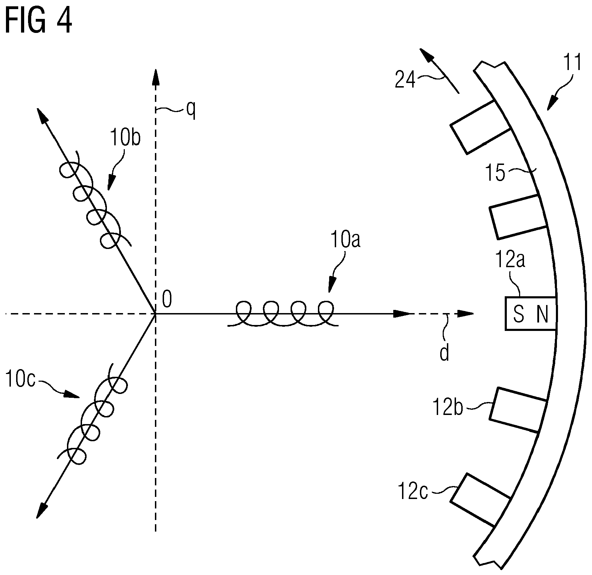

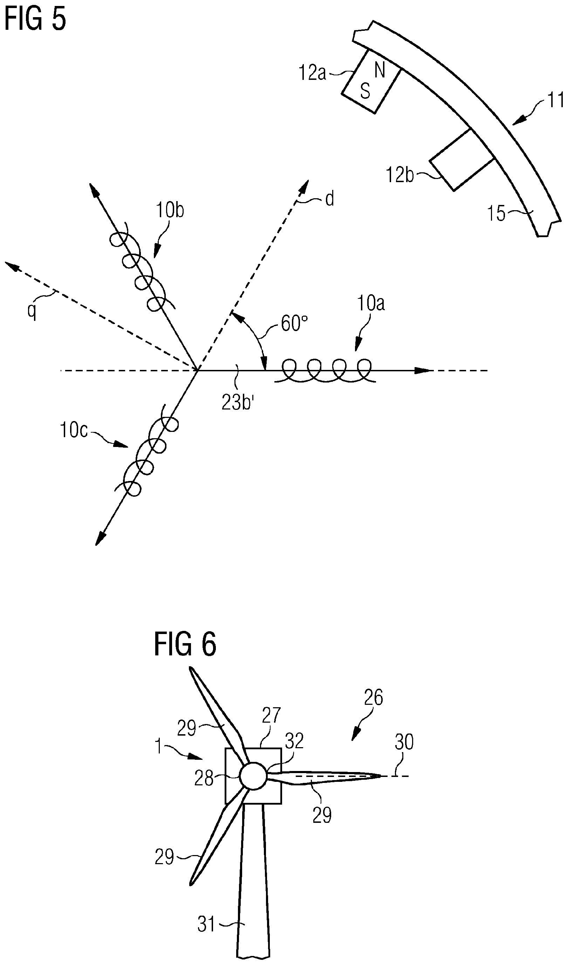

**Fig. 4** **and** **5** illustrate schematically electrical angle relations of one coil 10a relative to one magnet 12a when in a predetermined circumferential relative orientation. Also indicated in Fig. 4 and 5 are axes d and q of a rotating coordinate system synchronously rotating with the rotor 11 partially illustrated in Fig. 4. The relative azimuthal angle difference of the one coil 9a, and the magnet 12a is 0°/p in the situation as illustrated in Fig. 4 and 60°/p as illustrated in Fig. 5. (The relative electrical angle difference of the one coil 9a, and the magnet 12a is 0° in the situation as illustrated in Fig. 4 and 60° (reference sign 23b') as illustrated in Fig. 5.)

The rotor 11 rotates in the direction illustrated with arrow 24. In the situation as illustrated in Fig. 4, the phase currents Ib and Ic may evenly provide the required torque, while the phase current Ia is 0. The torque is generated by providing current along the q-axis and both the phase B current and the phase C current are only 30° inclined with respect to the q-axis in the situation illustrated in Fig. 4, thereby they in combination can provide respective currents in order to generate the required torque without reaching their peak current positions or values.

In the embodiment illustrated in Fig. 5, the torque (along axis q) is provided by current flow Ib and Ia through the coils 10a, 10b while the phase C current for the coil 10c is set to 0.

In the situation as illustrated in Fig. 4, the following holds: Ia = 0, Ib = 0.86 and Ic = -0.86. In the situation as illustrated in Fig. 5, the following holds: Ia = -0.86, Ib = 0.86 and Ic = 0. Fig. 4 corresponds to the relative electrical angle difference 23a (being 0) in Fig. 3 and the situation illustrated in Fig. 6 corresponds to the electrical angle difference 23b (being 60°) Fig. 3.

Embodiments of the present invention employ a skewed magnet row or magnet row extending exactly along the axial direction. Embodiments of the present invention provide that the one of the coils and one of the magnets have a (respective) predetermined circumferential relative position for plural predetermined azimuthal positions of the hub, in particular for at least three predetermined azimuthal positions which are for example spaced apart angle of 120°.

**Fig. 6** illustrates in a schematic manner a wind turbine 26 according to an embodiment of the present invention comprising a nacelle 27 which houses a power train 1, as is for example illustrated in a partially broken away view in Fig. 1. To the hub 28 which is coupled to the rotor 11 of the power train portion 1, plural rotor blades 29 are mounted. The wind turbine 26 is illustrated, while the hub 28 is in a predetermined azimuthal position in which for example one of the rotor blades 29 is substantially oriented to be parallel to a horizontal plane 30. In this situation, the rotor blade which is horizontally oriented may for example be mounted or demounted from the hub 28. The nacelle 27 is mounted rotatably on top of a wind turbine tower 31. The wind turbine 26 is configured to carry out a method of handling a power train portion 1 of the wind turbine 26.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Power train portion (1) of a wind turbine (26), comprising:
an electrical generator (5) including:
a stator (6) having plural teeth (7) with slots (8) in between and having at least one multiphase stator winding set at least partly arranged in the slots (8) forming plural coils (10a,10b,10c);
a rotor (11) having plural permanent magnets (12a, 12b, 12c) mounted and being rotatably supported relative to the stator (6);
a hub (28) with plural mounting sites (32) for plural rotor blades (29), the hub (28) being coupled to the rotor (11),
wherein when the hub (28) is rotated to at least one predetermined azimuthal position,
one (10a) of the coils (10a,b,c) and one (12a) of the magnets (12a,b,c) have a predetermined circumferential relative position (23a,23b,23c,...).

2. Power train portion according to the preceding claim, wherein the predetermined circumferential relative position (23a,23b,23c,...) is **characterized by** a predetermined relative azimuthal angle difference between the one coil (9a) and the one magnet (12a).

3. Power train portion according to one of the preceding claims,
wherein the at least one winding set is configured to provide three electrical phases,
wherein the predetermined relative azimuthal angle difference (23a,23b,23c,...) is substantially 60°*k/p, wherein p is the number of pole pairs of the magnets (12a,b,c) of the rotor (11) and k is an integer.

4. Power train portion according to one of the preceding claims, wherein the predetermined relative azimuthal angle difference (23a,23b,23c,...) is set between a circumferential center axis (14a) of the coil (10a) and a circumferential center (13a) of the one of the magnets (12a),
wherein in particular the one coil and the one magnet are or are not axially aligned.

5. Power train portion according to one of the preceding claims, wherein the predetermined azimuthal position of the hub (28) is a locking position of the rotor or the hub at which the hub and/or the rotor (11) can be locked to the stator (6), in particular employing a locking system.

6. Power train portion according to one of the preceding claims,
wherein the rotor (11), in particular a brake disk coupled to or included in the rotor, comprises at least one locking hole used for locking the rotor to the stator; and/or the power train further comprising:
at least one locking pin, in particular guided in a hole of the stator, insertable into the locking hole of rotor.

7. Power train portion according to one of the preceding claims,
wherein the magnets are mounted in magnet rows (16a,b,c,...) substantially along the axial direction (2), thereby having skewing angle equal to zero, wherein the one magnet (12a) is a first magnet of one (16a) of the magnet rows; or
wherein the magnets are mounted in magnet rows (16a,b,c) in a skewed manner, the magnet rows including a skewing angle different from zero relative to the axial direction and the one magnet is a magnet (12a') substantially at an axial center of the magnet row (16a).

8. Power train portion according to one of the preceding claims,
wherein, when the hub (28) is rotated to the predetermined position, a torque can be generated by the generator by allowing, in the winding set, current flow (Ib, Ic) of two phases having substantially same magnitude, while a current flow (Ia) of the remaining phase is substantially zero, wherein the magnitude is less than a maximum magnitude when the rotor would be rotated 360° of an electrical angle.

9. Power train portion according to one of the preceding claims,
wherein the winding set exhibits concentrated winding topology; or
wherein the winding set exhibits distributed winding topology, wherein the one coil (10a) is formed by a wire portion of the winding set wound around teeth (7) that are not immediately circumferentially adjacent to each other and/or having one or more other teeth (7) in between.

10. Power train portion according to one of the preceding claims, further comprising:
at least one converter (25) electrically connected to the multiphase winding set.

11. Power train portion according to one of the preceding claims, wherein the one coil (10a) is a phase A coil which in particular has a 90° bent at an axial end of the stator (6).

12. Power train portion according to one of the preceding claims, further comprising:
plural rotor blades (29), zero or more mounted at the hub (28).

13. Wind turbine (26), comprising:
a nacelle (27) partly housing a power train portion (1) according to one of the preceding claims.

14. Method of handling a power train portion (1) of a wind turbine (26), in particular during assembly and/or maintenance, the power train portion comprising:
an electrical generator (5) including:
a stator (6) having plural teeth (7) with slots (8) in between and having at least one multiphase stator winding set at least partly arranged in the slots forming plural coils (10a,10b,10c);
a rotor (11) having plural permanent magnets (12a,12b,12c) mounted and being rotatably supported relative to the stator (6);
a hub (28) with plural mounting sites (32) for plural rotor blades (29), the hub (28) being coupled to the rotor (11),
the method comprising:
rotating the hub (28) to a predetermined azimuthal position,
one (9a) of the coils and one of the magnets (12a) thereby having a predetermined circumferential relative position (23a) .

15. Method according to the preceding claim, further comprising:
locking the rotor (11) or hub (28) to the stator (6), while the hub is in the predetermined azimuthal position; and/or
performing maintenance and/or assembly work; and/or
unlocking the rotor (11) or hub (28) from the stator (6), while the hub is in the predetermined azimuthal position; and/or
rotating the rotor (11) or the hub (28) such that the hub is in another azimuthal position different from the predetermined azimuthal position.
